Europäisches Patentamt

European Patent Office

Office européen des brevets

(11) Publication number: 0 350 249
A2

# EUROPEAN PATENT APPLICATION

(21) Application number: 89306752.0

(51) Int. Cl.⁴: **H05B 6/64**

(22) Date of filing: 03.07.89

(30) Priority: 04.07.88 GB 8815852
23.08.88 GB 8819985
28.11.88 GB 8827706

(43) Date of publication of application:
10.01.90 Bulletin 90/02

(84) Designated Contracting States:
AT BE CH DE ES FR GB GR IT LI LU NL SE

(71) Applicant: BECKETT INDUSTRIES INC.
610 South Service Road
Oakville Ontario L6K 2H4(CA)

(72) Inventor: Beckett, Donald Gregory
3695 Kaneff Crescent, Apt.No. 1104
Mississauga,Ontario L5A 4B6(CA)

(74) Representative: Laight, Martin Harvey et al
W H Beck, Greener & Company 7 Stone
Buildings Lincoln's Inn
London WC2A 3SZ(GB)

(54) Laminate structure and method of heating.

(57) A synergistic heating effect is attained in a microwave heat susceptor by providing a laminate containing two individual metal layers each of a thickness capable of converting a portion of microwave energy incident thereon to thermal energy.

FIG. 1.

## LAMINATE STRUCTURE AND METHOD OF HEATING

### FIELD OF INVENTION

The present invention relates to a multiple layer heating element, particularly for use in microwave food heating applications.

### BACKGROUND TO THE INVENTION

It is well known that a metal film of a sufficiently-thin depth can convert microwave energy into thermal energy for heating a variety of food products. One prevalent use of such material is in the microwave popping of corn.

Such thin metal film, usually aluminum, although other semi-conductive metals, such as stainless steel, copper and gold, may be employed, is provided on a support, usually a polymeric film, and discrete patches or islands of such thin metal generally are provided thereon in the regions desired to generate heat by selective demetallization of a metallized polymeric sheet, such as by using any of the procedures described in U.S. Patents Nos. 4,398,994, 4,552,614 and 4,610,755, the disclosures of which are incorporated herein by reference.

When microwave energy is applied to the metal supported on a polymeric film, distortion of the polymeric film occurs as the metal film heats up and the metal film thereupon becomes ineffective. It is necessary, therefore, to laminate the polymeric film to dimensionally-stable paper to prevent such distortion from occurring during the generation of heat from the metal film.

Within the range of thickness of metal wherein microwave energy is converted into thermal energy, the amount of heat which is generated tends to increase with the thickness of the metal film. For aluminum, this range is generally over the optical density range from about 0.10 to about 0.80.

A search with respect to the subject matter of the present invention has been conducted in the facilities of the United States Patent and Trademark Office and, as a result of this search, the following U.S. Patents were cited as the most relevant prior art:

U.S. 4,713,510 Quick et al
4,777,053 Tobelmann et al
4,122,324 Falk

U.S. Patent No. 4,122,324 discloses a microwave shielding device for use in connection with controlled microwave heating of foods. The shielding effect is achieved by using two metal films of appropriate thickness provided one on each surface of a primary structural sheet.

U.S. Patent No. 4,713,510 discloses a structure in a dish arrangement, which employs two layers of metal of microwave susceptor thickness in a laminate arrangement.

U.S. Patent No. 4,777,053 discloses a microwave heating package which has heating panels which include an inner heating layer of metallized film mounted on a mounting board and an outer microwave shield.

### SUMMARY OF INVENTION

It has now surprisingly been found that by providing multiple metal layers separated one from another, more thermal energy is generated from the multiple layers than is the case with a single metal layer of thickness corresponding to the combined thickness of the multiple metal layers. This synergistic effect increases with the number of individual metal layers.

This proposal permits considerably-enhanced levels of heat to be achieved than is achievable with a single metal layer, thereby removing one of the limitations of use of the existing laminates, namely that the level of heat output limits the utility to applications requiring only low levels of heating, such as in the microwave popping of corn.

Accordingly, in one aspect, the present invention provides a laminate structure comprising a plurality of superimposed layers. A first thin metal layer is provided of a thickness capable of converting at least a portion of incident microwave energy to thermal energy and a second thin metal layer is provided also of a thickness capable of converting at least a portion of incident microwave energy to thermal energy. At least one additional support layer is provided separating the first thin metal layer from the second thin metal layer such that thermal energy generated by exposure of the laminate to microwave radiation is greater than the sum of the thermal energies produced by the two individual metal layers.

In one embodiment of the multiple metal layer structure of the invention, the metal film is provided on both faces of the substrate, which may be a polymeric film. It has been found that the thickness of the substrate layer also affects the heat output obtained from the multiple layer structure, since the three-dimensional spacing of the islands in the two layers varies with the thickness.

The multiple metal layer structure may be arranged as a laminate of a plurality of individual metal layers or individual substrates, which may themselves have varying thickness and of differing materials, as desired.

## BRIEF DESCRIPTION OF DRAWINGS

Figure 1 is a sectional view of a two-layer heat susceptor laminate provided in accordance with one embodiment of the invention;

Figure 2 is a sectional view of a three-layer heat susceptor provided in accordance with another embodiment of the invention; and

Figure 3 is a sectional view of a multiple-layer heat susceptor provided in accordance with a further embodiment of the invention.

## DESCRIPTION OF PREFERRED EMBODIMENT

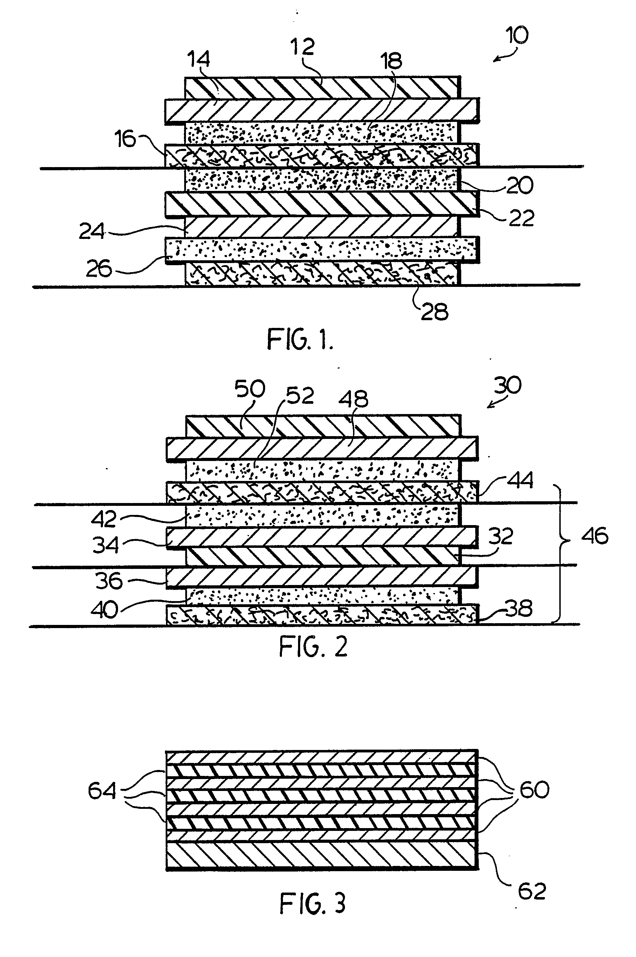

Referring to the drawings, in Figure 1 there is shown a laminate structure 10 comprising a plurality of layers, the thickness of which are not shown to scale for ease of illustration. A first layer 12 is a flexible polymeric material film, such as polyester, to which is adhered a first metal layer 14 of thickness capable of conversion of microwave energy to thermal energy, usually aluminum having a thickness corresponding to an optical density of about 0.08 to about 0.80, preferably an optical density of about 0.10 to about 0.40. Metallized polymeric films formed by vapor deposition of the metal on the polymeric film are readily commercially available.

The metal layer 14 may be provided adhered to the whole of the polymeric material film 12, or, as often is required for a particular end use of the laminate 10, a portion of the polymeric material film 12 only. As mentioned earlier, the metal may be removed from undesired portions of the original metallized polymeric film by selective demetallization.

To maintain dimensional stability and the heat-susceptor capability of the metal layer 14 when microwave energy is applied thereto, the combination of metal layer 14 and polymeric material layer 12 is adhered to a layer 16 of any suitable electrically non-conductive, heat-stable material, such as paper or paperboard. The layer 16 may be of any suitable weight and type to resist deformation as the metal layer heats up. A laminating adhesive layer 18 may be provided by any of the well-known laminating adhesives, if required, to achieve adhesion to the metal layer 14.

While the heat-stable layer 16 is shown adhered to the metal layer side of the polymer-metal combination, the heat-stable layer 16 may be adhered to the polymer film side of the polymer-metal combination, if desired.

The laminate of layers 12, 14, 16 and 18 is laminated by adhesive layer 20 to a second laminate of polymeric material layer 22, metal layer 24, laminating adhesive layer 26, if required, and an external heat-stable layer 28. Similarly, further combinations of polymeric material layer, metal layer, laminating adhesive layer, if required, and heat-stable layer may be added.

The metal layer 24 may have the same thickness as or a thickness differing from that of metal layer 14. The location of the heat-stable layer 28 and polymeric film layer 22 may be reversed, if desired, as may the polymeric film layer 12 and heat-stable layer 16.

Application of microwave energy to the laminate 10 results in the conversion of a portion of the microwave energy into thermal energy at the metal layers 14 and 24. The two metal layers 14 and 24 produce more heat output from the laminate than a single metal layer having a thickness corresponding to the combined thickness of the metal layers 14 and 24, at the same application level of microwave energy.

The amount of thermal energy produced by each individual metal layer 14 and 24 increases with thickness of metal layer is in the range of about 0.08 and about 0.40 optical density. Therefore, with the two metal layers 14 and 24, not only a greater heat output possible because each individual layer is contributing to the overall heat output but also the overall heat output is synergistically enhanced.

Turning now to Figure 2, there is shown therein a laminate 30 which employs three individual metal layers, again enhancing the overall heat output attainable. In this arrangement, there is employed a unique structure comprising a polymeric film layer 32 which has a metal layer 34, 36 adhered to both faces. The individual metal layer 34 and 36 each has a thickness which results in conversion of microwave energy into thermal energy upon the application of microwave energy thereto. The provision of such an arrangement constitutes one embodiment of the invention. The combination of layers 32, 34 and 36 is laminated, on one side, to a layer 38 of paper or other non-conductive, heat-stable material through an adhesive layer 40, if required, and, on the other side, to a layer 42 of paper or other non-conductive, heat-stable material through an adhesive layer 44, if required. The laminate 46 of layers 32 to 44, having outer heat-stable layers providing dimensional stability to the laminate when microwave energy is applied thereto, and adhered by conventional laminating adhesive, if required, to the novel structure of a polymeric film layer having a heat-generating semi-conductor metal layer on each side thereof, constitutes another embodiment of the invention.

A third metal layer 48 is adhered to an outer polymeric film layer 50 is adhered to the heat-stable layer 44 by any convenient laminating adhesive layer 52, if required. The first, second and third metal layers 34, 36 and 48 may have the same or differing thicknesses within the thermal energy-generating range. Again, synergistic heat generation is attained.

Through the use of the novel three-layered structure 32, 34 and 36, the three metal layer laminate 30 is formed with a minimum of adhesive, polymeric material and heat-stable layer.

In Figure 3, there is shown a sectional view of another embodiment of the invention wherein multiple layers of metal 60 (shown schematically in broken line) are provided on a substrate 62 provided of paper or polymeric film, with the metal layers 60 each separated by layers 64 of suitable electrically insulating material (shown schematically in solid line), such as silica.

The structure shown in Figure 3 may be produced in a single pass in a sputter-type or electron beam vacuum metallizer, thereby providing a considerable economic advantage.

## EXAMPLE

Commercial individual size pizzas were microwave reconstituted according to directions on the box, namely two minutes in the microwave oven using (a) no heat susceptor, (b) a prior art heat susceptor comprising a single layer of aluminum of 0.50 optical density laminated between a grease guard paper layer and a polymeric film carrying the aluminum layer, and (c) a two-layer laminate as illustrated in Figure 1 in which each aluminum layer is 0.25 optical density.

In all these cases, the topping portion of the pizza was satisfactorily reheated. In the case of no heat susceptor, there was no evidence of browning of the pizza crust. In the case of the single metal layer, there was some evidence of browning. In the case of the two-layer element, the crust was browned. Increasing the heating time to three minutes for the heat susceptors resulted in burning, i.e., over-cooking of the crust, with the two-layer laminate, while the crust showed some further browning with the single layer.

## SUMMARY OF DISCLOSURE

In summary of this disclosure, the present invention provides a novel microwave heating element which exhibits a synergistic heating effect by the use of multiple separate layers of aluminum or other semi-conductive metal. Modifications are possible within the scope of this invention.

In addition to the aspects of the invention set out in the introductory paragraphs of the specification, it is to be noted that in another broad aspect of the invention there is provided a heating element for microwave heating comprising a laminate structure having at least two metal layers each of a thickness capable of converting at least a portion of incident microwave energy into thermal energy, and at least one layer of electrically non- conductive material separating succeeding metal layers in the laminate.

The various preferred combinations of layers, and dimensions of layers, which have been set out hereinbefore, may also be provided in combination with the above aspect of the invention.

In general, features of the invention which have been set out with regard to a laminate structure, and to a heating element, are also provided in accordance with a method of heating according to the invention.

In particular, there is also provided in accordance with the invention a method of heating an item comprising placing the item in contact with or in proximity to a laminate structure comprising at least two metal layers and at least one layer of electrically non-conductive material separating succeeding metal layers, and applying microwave energy to the laminate to convert at least a portion of the microwave energy into thermal energy for heating the item.

## Claims

1. A laminate structure, comprising (a) a first thin metal layer of a thickness capable of converting at least a portion of incident microwave energy to thermal energy, (b) a second thin metal layer of a thickness capable of converting at least a portion of incident microwave energy to thermal energy, and (c) at least one additional support layer separating the first thin metal layer from the second thin metal layer such that the thermal energy which may be generated by exposure of the laminate to microwave radiation is greater than the sum of the thermal energy provided by the two individual metal layers.

2. A laminate as claimed in claim 1, in which each metal layer is an aluminum layer having a thickness corresponding to an optical density of about 0.08 to about 0.80.

3. A laminate as claimed in claim 2, in which each aluminum layers each has a thickness corresponding to an optical density of about 0.10 to about 0.40.

4. A laminate as claimed in any one of claims 1 to 3, in which the at least one additional support layer comprises a single polymeric film layer on which each of the metal layers is deposited.

5. A laminate as claimed in any one of claims 1 to 4, in which at least one of the metal layers is laminated to a dimensionally-stable electrically non-conducting substrate.

6. A laminate as claimed in any one of claims 1 to 4, in which both the metal layers is laminated to a dimensionally-stable electrically non-conducting substrate.

7. A laminate as claimed in claim 5 or 6, in which the substrate is paper.

8. A laminate as claimed in any one of claims 5 to 7, in which a third metal layer having a thickness corresponding to an optical density of about 0.10 to about 0.40 deposited on a third polymeric film layer is laminated thereto.

9. A laminate as claimed in claim 1, in which the first thin metal layer is deposited on a first polymeric film layer, the second thin metal layer is deposited on a second polymeric film layer, the first metal layer is laminated to a first substrate layer of dimensionally-stable electrically non-conducting material, the second metal layer is laminated to a second substrate layer of dimensionally-stable electrically non-conducting material, and the second substrate layer is laminated to the first polymeric film layer.

10. A laminate as claimed in claim 9, in which the first and second substrate layers each is provided by a paper layer.

11. A heating element for microwave heating comprising a laminate structure having at least two metal layers each of a thickness capable of converting at least a portion of incident microwave energy into thermal energy, and at least one layer of electrically non-conductive material separating succeeding metal layers in the laminate.

12. A method of heating an item comprising placing the item in contact with or in proximity to a laminate structure comprising at least two metal layers and at least one layer of electrically non-conductive material separating succeeding metal layers, and applying microwave energy to the laminate to convert at least a portion of the microwave energy into thermal energy for heating the item.

FIG. 1.

FIG. 2

FIG. 3